# EUROPEAN PATENT APPLICATION

(11) **EP 4 704 395 A1**
(43) Date of publication of application: **04.03.2026**
(21) Application number: 25193521.9
(22) Date of filing: 01.08.2025
(51) Int. Cl.: H04L 45/02, H04L 45/033, H04L 45/18, H04L 45/48, H04L 45/00

(54) **EXCHANGE OF REACHABILITY INFORMATION BASED ON SPANNING TREE STATE**

(30) Priority: 29.08.2024 US 202418819273
(71) Applicant: Arista Networks, Inc., Santa Clara, CA 95054 (US)
(72) Inventor: GUERIN, Daniel Robert, Santa Clara, 95054 (US); KAMISETTY, Jeevan Madhu, Santa Clara, 95054 (US); LO, Alton, Santa Clara, 95054 (US)
(74) Representative: Barton, Russell Glen

(57) **Abstract**

A network device may include memory circuitry and processing circuitry. The processing circuitry may be configured to obtain a spanning tree topology indicating at least one spanning tree interface state. The processing circuitry may be configured to perform reachability information advertisement based on the spanning tree interface state. In some illustrative configurations, the network device may be one of multiple multihoming network devices configured to provide an Ethernet segment and the reachability information being advertised based on the spanning tree interface state includes Ethernet Virtual Private Network (EVPN) route information.

## Description

This application claims priority to U.S. patent application No. 18/819,273, filed August 29, 2024, which is hereby incorporated by reference herein in its entirety.

### Background

This relates to network devices, including network devices configured to exchange network reachability information.

As an example, network devices performing Ethernet Virtual Private Network (EVPN) operations can exchange EVPN routes with each other. This exchange of network reachability information can occur using Multiprotocol Border Gateway Protocol (MP-BGP). In an illustrative configuration, multiple EVPN network devices can be coupled to the same multihomed device via a corresponding Ethernet segment. These multiple EVPN network devices can also perform Spanning Tree Protocol operations to provide loop-free network logical topologies.

### Brief Description of the Drawings

FIG. 1 is a diagram of an illustrative network having network devices in accordance with some embodiments.
FIG. 2 is a diagram of an illustrative network device in accordance with some embodiments.
FIG. 3 is a diagram of illustrative network devices configured to convey bridge protocol data units to a multihomed device in accordance with some embodiments.
FIG. 4 is a diagram of illustrative network devices configured to advertise routing information based on spanning tree state information for a spanning tree instance in accordance with some embodiments.
FIG. 5 is a diagram of an illustrative network device configured to advertise network reachability based on spanning tree state information for a spanning tree instance in accordance with some embodiments.
FIG. 6 is a diagram of an illustrative network device configured to advertise withdrawal of network reachability based on spanning tree state information for a spanning tree instance in accordance with some embodiments.
FIG. 7 is a diagram of illustrative network devices configured to exchange spanning tree state information for a spanning tree instance with each other in accordance with some embodiments.
FIG. 8 is a flowchart of illustrative operations for performing spanning-tree-based routing information advertisement in accordance with some embodiments.

### Detailed Description

A network can convey network traffic (e.g., in the form of frames, packets, and/or other formats) between hosts. To properly forward the network traffic, the network can include a number of network devices. In illustrative configurations described herein as examples, some of these network devices may implement an Ethernet Virtual Private Network (EVPN) process and may exchange network reachability information (e.g., hardware address reachability information, Ethernet segment reachability information, etc.) represented by EVPN route information with one another and process the exchanged information. These network devices are sometimes referred to as EVPN network devices, EVPN devices, or EVPN speakers.

Configurations in which the exchange of EVPN route information occurs using Border Gateway Protocol (BGP), or more specifically Multiprotocol BGP (MP-BGP), and/or with Virtual Extensible Local Area Network (VXLAN) or Multiprotocol Label Switching (MPLS) tunneling technology (e.g., using VXLAN or MPLS infrastructure) are sometimes described herein as illustrative examples. If desired, the exchange of network reachability information can occur with other control plane routing protocols and/or utilizing other types of network overlay infrastructure. As described herein, network reachability information (sometimes referred to herein as network portion reachability information or simply reachability information) may refer to information indicative of reachability of a particular network (portion), including, but not limited to, reachability of a particular hardware address, reachability of a particular Ethernet segment, reachability of a particular network segment, reachability of one or more (Internet Protocol) network prefixes in the network layer context, and/or generally direct or indirect reachability of one or more network destinations.

In an illustrative configuration, a set of EVPN network devices may be coupled to a multihomed device, or generally a network portion, via an Ethernet segment (e.g., in an all-active multihoming configuration). The set of EVPN network devices may each be configured to advertise reachability information for the Ethernet segment and/or hosts in the multihomed network portion to other EVPN speakers.

To provide loop-free network (logical) topologies, network devices, such as the set of EVPN network devices and the multihomed device, may be configured to implement a spanning tree protocol. The spanning tree protocol may facilitate the construction of spanning trees (sometimes referred to as spanning tree instances or spanning tree topologies), each for one or more Virtual Local Area Networks (VLANs). To construct a spanning tree topology, the network devices may determine spanning tree states of their input-output interfaces (e.g., ports), including the interfaces of the set of EVPN network devices providing the Ethernet links that form the Ethernet segment. As part of the operations in accordance with the spanning tree protocol, an interface may be placed in a non-forwarding spanning tree state for a given spanning tree instance (e.g., when the spanning tree interface state is being resolved as part of generating or updating the spanning tree instance, when network topology changes occur, as part of network device initialization or network setup, etc.), thereby causing the traffic received on the interface to be dropped even when the corresponding (Ethernet) link provided by the interface is active and usable.

By implementing logical topology interface states (e.g., for a logical topology of a spanning tree) that differ from (underlying) states of interfaces (e.g., the up or down states of the Ethernet interfaces and/or Ethernet links provided thereon), network devices can sometimes exhibit undesired behavior. As one illustrative example, EVPN-based route advertisements and/or other types of reachability information advertisement can be transmitted based on the apparently up state of the Ethernet interface and link, even while the spanning tree topology interface state of the interface is actually in a non-forwarding state (as determined in accordance with a spanning tree protocol). This advertisement of reachability based on the apparent up state of the Ethernet interface and link can cause unintendedly blackholing of traffic at the Ethernet interface (based on the non-forwarding state imposed on the interface).

Accordingly, to minimize disruptions of traffic forwarding (e.g., unintendedly blackholing of traffic), network devices may be configured to advertise at least some types of network reachability information and/or other routing information based on logical topology interface states (e.g., spanning tree interface states determined in accordance with a spanning tree protocol).

Configurations in which EVPN network devices multihome a network device in an all-active configuration, in which the EVPN network devices and the multihomed network device all implement a spanning tree protocol, and/or in which the EVPN network devices perform EVPN route advertisements based on spanning tree interface states are sometimes described herein as illustrative examples. In general, other suitable network devices disposed in other suitable network configurations may similarly convey (advertise) network reachability information or routing information based on spanning tree interface states or other logical topology interface states.

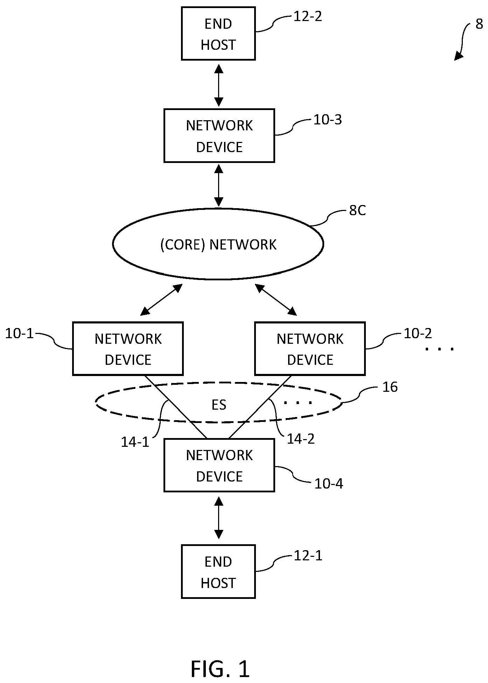

An illustrative network in which one or more network devices are configured to exchange reachability information (e.g., EVPN route information) based on logical topology interface states (e.g., spanning tree interface states) is shown in FIG. 1. A network such as network 8 may be of any suitable scope and/or form part of a larger network of any suitable scope. As examples, network 8 may include, be, or form part of one or more local segments, one or more local subnets, one or more local area networks (LANs), one or more campus area networks, a wide area network, etc. Network 8 may include any suitable number of different network devices that connect corresponding end hosts of network 8 to one another.

In general, network 8 may include one or more wired portions with network devices interconnected based on wired technologies or standards such as Ethernet (e.g., using copper cables and/or fiber optic cables) and, if desired, one or more wireless portions implemented by wireless network devices (e.g., to form wireless local area network (WLAN) or Wi-Fi networks). If desired, network 8 may include internet service provider networks (e.g., the Internet) or other public service provider networks, private service provider networks (e.g., multiprotocol label switching (MPLS) networks), and/or may include other types of networks such as telecommunication service provider networks.

In the illustrative example of FIG. 1, network 8 may include a core network or core network portion 8C interconnecting different edge networks or edge network portions (e.g., different sites and/or different domains). As one illustrative example, core network portion 8C may include or form a backbone network such as one or more service provider networks (e.g., Internet or Internet Protocol (IP) service provider networks, Multiprotocol Label Switching (MPLS) infrastructure networks, cloud provider networks, or generally a communication network core). Core network portion 8C may connect different edge network portions belonging to entities (e.g., customers) different from (or the same as) those that provide core network portion 8C. In configurations in which network devices implement one or more EVPN instances over core network portion 8C, core network portion 8C may sometimes be referred to herein as an EVPN core or generally an underlay network.

Core network 8C may include core network devices which are sometimes referred to as provider (network) core devices whereas edge network devices, such as network devices 10-1, 10-2, and 10-3, may sometimes be referred to as provider (network) edge devices. The provider core devices may be interconnected with each other within core portion 8C. Network paths may couple one or more provider core devices to provider edge devices (e.g., devices 10-1, 10-2, and 10-3) that serve as interfaces between the core network 8C and the corresponding edge network portions. These edge network portions (e.g., each representing different site(s), domain(s), etc.) may each include its own set of hosts and its own set of network devices between its hosts and one or more corresponding provider edge devices.

In the example of FIG. 1, network devices 10-1 and 10-2 communicatively couple core network 8C to an edge network portion (e.g., a customer network portion) of network 8 containing network device 10-4 and end host 12-1. Another network device 10-3 communicatively couples core network 8C to another edge network portion (e.g., another customer network portion) of network 8 containing end host 12-2. As examples, hosts of edge network portions may be communicatively coupled to a provider edge device indirectly via one or more intervening customer network devices or directly attached (e.g., via cable(s), without an intervening network device) to a provider edge device. Accordingly, while host 12-2 is shown to be directly attached to provider edge device 10-3, this is merely illustrative. An intervening (customer) network device may be communicatively coupled between network device 10-3 and host 12-3. Such an intervening (customer) network device, and more generally customer network devices (e.g., network device 10-4) directly attached to provider edge devices, may sometimes be referred to as customer edge devices.

Network devices in network 8 such as (provider) core network devices in core network 8C, (provider) edge network devices (e.g., devices 10-1, 10-2, and 10-3), and (customer or site) network devices in the edge network portions (e.g., device 10-4) may each include or be a switch (e.g., a single-layer (Layer 2) switch or a multi-layer (Layer 2 and Layer 3) switch), a bridge, a router, a gateway, a hub, a repeater, a firewall, a wireless access point, a network device serving other networking functions, a network device that includes the functionality of two or more of these devices, a management device that controls the operation of one or more of these network devices, and/or other types of network devices. Configurations in which network devices 10-1, 10-2, and 10-3 are (multi-layer) switches, routers, gateways, or network devices that generally include routing functionalities (e.g., implements routing protocols) and in which network devices 10-1, 10-2, and 10-4 are network devices that include bridging functionalities (e.g., implements network bridge(s) using hardware and/or software) are described herein as an illustrative example.

Hosts such as end hosts 12-1 and 12-2 may be implemented on host equipment. Some hosts may be implemented on shared host equipment, while other hosts may each be implemented on a separate piece of host equipment. Different host equipment in network 8 (e.g., implementing hosts serving as end hosts of network 8 in an edge network portion or a site) may each include or be a computer, a server or server equipment, a portable electronic device such as a cellular telephone, a laptop, etc., a network traffic storage device, a networking service device, network management equipment that manages and controls the operation of one or more of hosts and/or network devices, and/or any other suitable types of specialized or general-purpose host computing equipment, e.g., running one or more client-side and/or server-side applications.

In some configurations described herein as an example, edge network devices 10-1, 10-2, and 10-3 may implement one or more EVPN instances over core network 8C, and accordingly, may be referred to as EVPN peer devices with respect to each other. In these illustrative configurations, the EVPN peer devices may exchange EVPN route information (e.g., hardware address reachability information) with one another over core network 8C. The EVPN route information (e.g., BGP messages containing the EVPN route information) may be exchanged based on any suitable underlying (transport layer and internet layer) protocol(s) that facilitate communication across core or underlay network 8C. Underlay network 8C (and the devices herein) may provide and implement underlying infrastructure over which the overlay VXLAN-based and/or MPLS-based network is implemented.

While network reachability information (e.g., hardware address reachability information, Ethernet segment reachability information, etc.) may be exchanged based on any suitable routing protocol, arrangements in which EVPN peer devices such as devices 10-1, 10-2, and 10-3 exchange network reachability information with one another using BGP, or more specifically MP-BGP, are described herein as an illustrative example. In these arrangements, devices 10-1, 10-2, and 10-3 may sometimes be referred to as BGP and/or EVPN speakers (e.g., configured to advertise and process corresponding advertised BGP messages containing EVPN route information). The use of BGP (e.g., MP-BGP) with a VXLAN or MPLS overlay network to implement the exchange of EVPN route information is merely illustrative. If desired, other routing protocols (or generally other control plane protocols) and/or other types of overlay network infrastructure may be used to facilitate the exchange of EVPN route information between EVPN peer devices, or more generally the exchange of network reachability information between (provider) edge network devices.

Still referring to FIG. 1, a set of (provider) edge network devices such as network devices 10-1 and 10-2 may be configured in a network configuration that provides multihoming for a device (e.g., a customer or site edge device such as network device 10-4). In particular, network device 10-4 may have an interface (e.g., a port channel interface) coupled to a corresponding interface at network device 10-1 and a corresponding interface at network device 10-2. These interfaces of the three network devices may be coupled via corresponding links (e.g., Ethernet link 14-1 between the Ethernet interfaces of network devices 10-1 and 10-4 and Ethernet link 14-2 between Ethernet interfaces of network devices 10-2 and 10-4). Network devices 10-1 and 10-2 may identify and configure links 14-1 and 14-2 to collectively form an Ethernet segment 16, through which network traffic can be conveyed to and from multihomed device 10-4 and any other network devices and hosts (e.g. host 12-1) in the network portion for which device 10-4 serves as the edge device.

While two network devices are shown to multihome device 10-4 and two links 14-1 and 14-2 are shown to form Ethernet segment 16 in the example of FIG. 1, this is merely illustrative. If desired, any other suitable number of network devices (e.g., three network devices, more than three network devices, etc.) may multihome device 10-4 and Ethernet segment 16 may include a corresponding Ethernet link for each of the network devices multihoming device 10-4.

In some configurations described herein as an example, network devices 10-1 and 10-2 (and any other multihoming devices) may implement an all-active configuration where each of the multihoming network devices (e.g., devices 10-1 and 10-2) is configured to be in an active state that forwards network traffic to and from the multihomed device 10-4 via the corresponding Ethernet link 14. This example is merely illustrative. If desired, network devices 10-1 and 10-2 may be configured in other manners, and at least some of the embodiments described herein may be analogously applied to network devices 10-1 and 10-2 configured in these other manners.

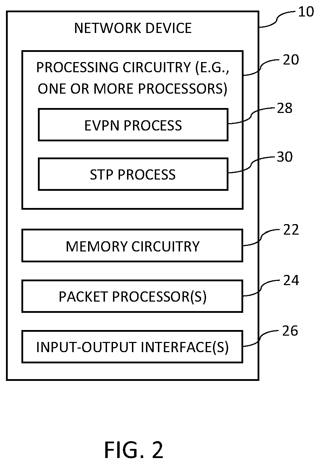

FIG. 2 is a diagram of an illustrative network device (e.g., implementing one or more of network devices 10-1, 10-2, and 10-3 in FIG. 1) configured to exchange routing information with other network devices. If desired, some network devices in network 8 (e.g., network device 10-4 in FIG. 1) may have at least some (e.g., all) of the same components as the network device depicted in FIG. 2 but may optionally omit execution of an EVPN process at the processing circuitry. If desired, network devices in network 8 (e.g., one or more of network devices 10-1, 10-2, 10-3, and 10-4 in FIG. 1) may execute other processes that similarly make use of at least some of the embodiments described herein with respect to advertising network reachability information based on logical topology states (e.g., in addition to or instead of an EVPN process and/or a spanning tree protocol process).

As shown in FIG. 2, network device 10 may include processing circuitry 20, memory circuitry 22, one or more packet processors 24, and input-output interfaces 26 (sometimes referred to as network interfaces) mounted on and/or within a housing of network device 10. In one illustrative arrangement, network device 10 may be or form part of a modular network device system (e.g., a modular switch system having removably coupled modules usable to flexibly expand characteristics and capabilities of the modular switch system such as to increase the number of ports, provide specialized functionalities, etc.). In another illustrative arrangement, network device 10 may be a fixed-configuration network device (e.g., a fixed-configuration switch having a fixed number of ports and/or a fixed hardware configuration).

Processing circuitry 20 may include one or more processors such as central processing units (CPUs), graphics processing units (GPUs), microprocessors, general-purpose processors, host processors, microcontrollers, digital signal processors, programmable logic devices such as field programmable gate array (FPGA) devices, application specific system processors (ASSPs), application specific integrated circuit (ASIC) processors, and/or other types of processors.

Processing circuitry 20 may run (e.g., execute) a network device operating system and/or other software/firmware that is stored on memory circuitry 22. Memory circuitry 22 may include one or more non-transitory (tangible) computer-readable storage media that store the operating system software and/or any other software code, sometimes referred to as program instructions, software, data, instructions, or code. As an example, the EVPN and/or spanning tree protocol operations performed by network device 10 described herein may be stored as (software) instructions on the one or more non-transitory computer-readable storage media (e.g., in portion(s) of memory circuitry 22). The corresponding processing circuitry (e.g., one or more processors of processing circuitry 20) may process or execute the respective instructions to perform the corresponding EVPN and/or spanning tree protocol operations.

Memory circuitry 22 may include non-volatile memory (e.g., flash memory, electrically-programmable read-only memory, a solid-state drive, hard disk drive storage, etc.), volatile memory (e.g., static random-access memory or dynamic random-access memory), removable storage devices (e.g., storage devices removably coupled to device 10), and/or other types of memory circuitry. Processing circuitry 20 and (at least a portion of) memory circuitry 22 as described above may sometimes be referred to collectively as control circuitry (e.g., implementing a control plane) for network device 10. Accordingly, processing circuitry 20 may sometimes be referred to as control plane processing circuitry 20.

As just a few examples, processing circuitry 20 may execute network device control plane software such as operating system software, routing policy management software, routing protocol or other protocol processes (e.g., EVPN process 28, spanning tree protocol process 30, a BGP process, etc.), routing information base processes, and other control software, may be used to support the operation of protocol clients and/or servers (e.g., to form some or all of a communications protocol stack), may be used to support the operation of packet processor(s) 24, may store packet forwarding information, may execute packet processing software, and/or may execute other software instructions that control the functions of network device 10 and the other components therein.

Packet processor(s) 24 may be used to implement a data plane or forwarding plane of network device 10. Accordingly, packet processor(s) 24 may sometimes be referred to as data plane processing circuitry 24. Packet processor(s) 24 may include one or more processors such as programmable logic devices (e.g., field programmable gate array (FPGA) devices), application specific system processors (ASSPs), application specific integrated circuit (ASIC) processors, central processing units (CPUs), graphics processing units (GPUs), microprocessors, general-purpose processors, host processors, microcontrollers, digital signal processors, and/or other types of processors.

Packet processor 24 may receive incoming network traffic via input-output interfaces 26, parse and analyze the network traffic, process the network traffic based on packet forwarding decision data (e.g., in a forwarding information base) and/or in accordance with network protocol(s) or other forwarding policy, and forward (or drop) the network traffic accordingly. The packet forwarding decision data may be stored on memory circuitry integrated as part of and/or separate from packet processor 24 (e.g., on content-addressable memory), and/or on a portion of memory circuitry 22. Memory circuitry for packet processor 24 may include volatile memory and/or non-volatile memory.

Input-output interfaces 26 may include one or more different types of communication interfaces such as Ethernet interfaces, optical interfaces, network layer (e.g., Internet Protocol (IP) such as IPv4 and/or IPv6) interfaces, wireless interfaces such as Bluetooth interfaces and Wi-Fi interfaces, and/or other communication interfaces for connecting network device 10 to the Internet, a local area network, a wide area network, a mobile network, and/or generally other network device(s), peripheral devices, and computing equipment (e.g., host equipment such as server equipment, client devices, etc.). In illustrative configurations described herein as an example, input-output interfaces 26 may include Ethernet interfaces implemented using and therefore including (Ethernet) ports. In particular, data link layer interface circuitry may be coupled to the ports to form Ethernet interfaces with the desired interface configurations. Processing circuitry 20 may further form (e.g., configure) network layer interfaces. The ports may be physically coupled and electrically connected to corresponding mating connectors of external equipment, when received at the ports, and may have different form-factors to accommodate different cables, different modules, different devices, or generally different external equipment.

In configurations in which network device 10 implements an EVPN with EVPN peer devices, processing circuitry 20 on network device 10 may execute an EVPN process 28 (sometimes referred to as EVPN agent 28). EVPN process 28 may manage and facilitate operations for implementing an EVPN such as the exchange of EVPN routes (e.g., EVPN route information contained in advertised BGP messages) with other EVPN peer devices and the handling and processing of the exchanged information. EVPN process 28 may be implemented as part of a BGP process (e.g., performing operations in accordance with the Border Gateway Protocol) executing on processing circuitry 20, or may be implemented separately from a BGP process that communicates with EVPN process 28 (e.g., both executing on processing circuitry 20).

In illustrative configurations described herein as an example, processing circuitry 20 may also execute a spanning tree protocol process 30. Spanning tree protocol process 30 may provide a mechanism by which network logical topologies (e.g., spanning trees) that are loop-free can be generated and used to forward network traffic. In particular, process 30 may generate one or more spanning trees (sometimes referred to as spanning tree instances or spanning tree topologies) each for one or more VLANs (e.g., each for forwarding traffic associated with the one or more VLANs). Each spanning tree may be defined at least partly by the (spanning tree) interface state of network device input-output interfaces determined by instances of process 30 executing on respective network devices 10 (e.g., devices 10-1, 10-2, and 10-4 in FIG. 1). The spanning tree interface state for a given interface and for a given spanning tree instance may be a forwarding state or a non-forwarding state. As examples, the non-forwarding state may be a discarding state, a learning state, a blocking state, a listening state, a disabled state, or any other non-forwarding state specified by a spanning tree protocol. The network device interfaces in the forwarding state for a spanning tree instance may serve as the forwarding interfaces used by the network device to perform loop-free network forwarding of network traffic (e.g., host traffic) for the spanning tree instance.

Spanning tree protocol process 30 may perform operations for implementing a spanning tree protocol (STP) that is in accordance with or is compatible with the Spanning Tree Protocol (e.g., defined by IEEE 802.1D), the Rapid Spanning Tree Protocol, the Multiple Spanning Tree Protocol, the Per-VLAN Spanning Tree Protocol, or other standardized versions of spanning tree protocols, that includes extensions or modifications to these standardized versions of spanning tree protocols, that is in accordance with or generally compatible with proprietary versions of spanning tree protocols, and/or that generally includes operations for facilitating the generation and use of spanning tree instances (and the network device interface states therein) for loop-free traffic forwarding.

While STP process 30 and EVPN process 28 (and a BGP process) are sometimes described herein to perform parts of STP, EVPN, and BGP operations for device 10, this is merely illustrative. Processing circuitry 20 may be organized in any suitable manner (e.g., to have other processes or agents instead of or in addition to a STP process 30, an EVPN process 28, a BGP process, etc.) to perform different parts of the STP, EVPN, and BGP operations described herein. Accordingly, processing circuitry 20 (or the control circuitry of device 10 formed therefrom) may sometimes be described herein to perform the STP, EVPN, and BGP operations described herein instead of specifically referencing one or more agents, processes, and/or the kernel executed by processing circuitry 20 that performs these STP, EVPN, and BGP operations.

Configurations in which network devices 10-1, 10-2, and 10-3 in FIG. 1 each execute an EVPN process 28 (e.g., on respective processing circuitry 20 of each of these network devices) and in which network devices 10-1, 10-2, and 10-4 in FIG. 1 each execute a STP process 30 (e.g., on respective processing circuitry 20 of each of these network devices) are sometimes described herein as an illustrative example. In these examples, multihoming network devices 10-1 and 10-2 may be configured with an all-active configuration in which both network devices serve as the active devices for conveying traffic to and/or from multihomed device 10-4.

As described above, processing circuitry 20 of each of network devices 10-1, 10-2, and 10-4 may perform operations based on a spanning tree protocol (e.g., when executing process 30). As part of these operations, network devices 10-1, 10-2, and 10-4 may transmit and receive bridge protocol data units (BPDUs), e.g., to facilitate the determination of a root network device (e.g., that implements the root bridge) of the spanning tree and to facilitate the determination of spanning tree states of network device interfaces for constructing the spanning tree.

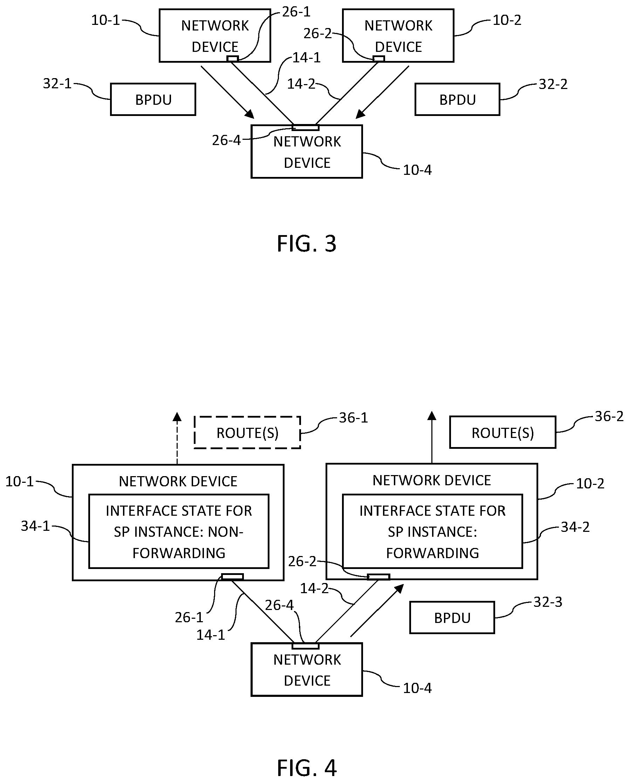

FIG. 3 is a diagram of illustrative network devices such as multihoming devices 10-1 and 10-2 configured to transmit BPDUs to another network device such as multihomed network device 10-4. In particular, processing circuitry 20 of device 10-1 (e.g., when executing STP process 30) may generate BPDU 32-1 to include an identifier (e.g., a bridge identifier) associated with device 10-1 and transmit BPDU 32-1 to device 10-4 using interface 26-1 and via Ethernet link 14-1 (forming part of Ethernet segment 16 in FIG. 1). Processing circuitry 20 of device 10-2 (e.g., when executing STP process 30) may generate BPDU 32-2 to include an identifier (e.g., a bridge identifier) associated with device 10-2 and transmit BPDU 32-2 to device 10-4 using interface 26-2 and via Ethernet link 14-2 (forming part of Ethernet segment 16 in FIG. 1). Processing circuitry 20 of device 10-4 (e.g., when executing STP process 30) may receive BPDUs 32-1 and 32-2 via interface 26-4 and process BPDUs 32-1 and/or 32-2 to perform operations in accordance with a spanning tree protocol (e.g., to determine a root network device for a spanning tree instance, to determine spanning tree interface states of local interfaces of device 10-4, etc.).

In some illustrative configurations described herein as an example, network devices 10-1 and 10-2 may be configured with the same bridge identifier (e.g., a smallest bridge identifier having the smallest priority value and/or smallest MAC address value out of all bridge identifier values, or out of bridge identifier values in the network). Configured in this manner, network devices 10-1 and 10-2 can facilitate other network devices' selection of network devices 10-1 and 10-2 as a group of root network devices (e.g., appearing to the other devices as a single root bridge that is in fact formed from multiple discrete multihoming network devices).

Responsive to receiving a given one of BPDUs 32-1 or 32-2 (and other BPDUs), a network device such as multihomed device 10-4 may determine that the sending network device should be selected as the root network device (the root bridge) for the spanning tree. FIG. 4 is a diagram of an illustrative network device such as multihomed network device 10-4 configured to identify network device 10-2 as a root network device for a given spanning tree instance based on processing the received BPDU 32-2. As examples, the operations described in connection with FIG. 4 may occur after network device 10-4 has received and processed BPDU 32-2 and/or before network device 10-4 has received or processed BPDU 32-1.

In the example of FIG. 4, processing circuitry 20 of device 10-4, based on BPDU 32-2 containing the smaller or smallest bridge identifier (e.g., a bridge identifier smaller than the bridge identifier of device 10-4), may select source device 10-2 as the root network device for the spanning tree instance. Processing circuitry 20 of device 10-4 may subsequently transmit, using interface 26-4 and via link 14-2, a BPDU 32-3 containing the bridge identifier associated with network device 10-4 (greater than the bridge identifier associated with network device 10-2) and/or other indications of the selection of device 10-2 as the root network device for the spanning tree instance. In illustrative configurations described herein as an example, a lowest bridge identifier is used to determine a root network device or a root network device group. However, if desired, a root network device (group) may be determined based on other metrics. Based on receiving BPDU 32-3 over link 14-2 using interface 26-2, processing circuitry 20 of device 10-2 may identify (e.g., determine) that interface 26-2 connected to link 14-2 is a designated port for the spanning tree instance and place interface 26-2 in a forwarding state (e.g., as the spanning tree interface state 34-2 for the spanning tree (SP) instance).

In contrast, while device 10-1 may have transmitted BPDU 32-1 to device 10-4, device 10-1 may not have received a corresponding BPDU (e.g., analogous to BPDU 32-3 received by device 10-2) from device 10-4 and therefore may not have received indication of selection of network device 10-1 as the root network device for the spanning tree instance. Accordingly, processing circuitry 20 of device 10-1 may place interface 26-1 connected to link 14-1 in a non-forwarding state (e.g., as the spanning tree interface state 34-1 for the spanning tree (SP) instance) to prevent a possible network loop in the spanning tree instance. In some instances, interface 26-1 may be placed in the non-forwarding spanning tree state (e.g., any combination of non-forwarding states) for the spanning tree instance as a transient state (e.g., in the process of determining the actual spanning tree state of interface 26-1, which can be forwarding or non-forwarding). As an example, after a period of time (e.g., after a timeout time period allotted for receiving the response BPDU from device 10-4, after a time period during which certain spanning tree protocol operations are performed, etc.) has elapsed (since the transmission of BPDU 32-1 or since another event indicating the beginning of the time period has occurred), processing circuitry 20 of device 10-1 may update the non-forwarding spanning tree interface state of interface 26-1 to a forwarding state (e.g., based on determining that device 10-1 is in a multihoming configuration with device 10-2, based on an indication that one or more of the network devices in the multihoming configuration have received a response BPDU from multihomed device 10-4, etc.), or if appropriate (e.g., in other scenarios), may keep interface 26-1 in a non-forwarding spanning tree interface state.

In addition to the above mentioned spanning tree protocol operations described in connection with FIGS. 3 and 4, network devices 10-1 and 10-2 may also advertise network reachability information (e.g., in the form of routes or route information in BGP messages) to other network devices to indicate network portions or destination(s) reachable via devices 10-1 and 10-2. In particular, the network reachability information may be advertised by network devices 10-1 and 10-2 based on their local interfaces 26 and corresponding links, e.g., Ethernet links 14-1 and 14-2, provided by interfaces 26 being active (e.g., in an up state) and usable to convey traffic.

As an example, processing circuitry 20 of network device 10-2 (e.g., when executing EVPN process 28) may generate and advertise network reachability information in the form of route(s) 36-2 (e.g., EVPN routes in BGP messages). Responsive to receiving and processing route(s) 36-2, remote devices such as network device 10-3 (FIG. 1) may forward traffic over core network 8C (FIG. 1) to network device 10-2 based on its advertised reachability (e.g., of devices via link 14-2 or Ethernet segment 16). Because interface 26-2 of network device 10-2 is placed in a forwarding state shortly after the reception and processing of BPDU 32-3, any traffic forward from network device 10-3 (e.g., sourced from host 12-2 in FIG. 1, conveyed over core network 8C in FIG. 1, etc.) may be appropriately handled (e.g., forwarded to host 12-1 in FIG. 1).

As another example, processing circuitry 20 of network device 10-1 (e.g., when executing EVPN process 28) may similarly generate and advertise network reachability information in the form of route(s) 36-1 (e.g., EVPN routes in BGP messages) based on interface 26-1 and link 14-1 being active and usable to convey traffic. However, with the example in connection with device 10-1 (in contrast with the above example in connection with device 10-2), traffic forwarded from remote device 10-3 to network device 10-1 based on its advertised reachability (e.g., of devices over link 14-1 or Ethernet segment 16) may be dropped at interface 26-1 of device 10-1 because the spanning tree state 34-1 of interface 26-1 is a non-forwarding state for the spanning tree instance associated with the advertised reachability and received traffic. While the non-forwarding state of interface 26-1 may be a temporary or transient state (e.g., in some illustrative scenarios) and may be updated to a forwarding state by processing circuitry 20 of network device 10-1 after a period of time (e.g., 20 seconds, 30 seconds, etc.), this may still cause undesired dropping (e.g., blackholing) of network traffic at interface 26-1 during the period of time.

To mitigate these types of issues, network devices such as devices 10-1 and 10-2 may each be configured to perform network reachability information advertisement based on spanning tree states (e.g., in addition to the Ethernet interface and link state). Accordingly, as an example with respect to network device 10-1 in FIG. 4, prior to processing circuitry 20 in network device 10-1 advertising network reachability with respect to interface 26-1 (e.g., reachability of devices via interface 26-1) in route(s) 36-1, processing circuitry 20 of device 10-1 (e.g., when executing EVPN process 28) may obtain interface state 34-1 with respect to the spanning tree instance. Processing circuitry 20 of device 10-1 may delay (e.g., indefinitely) the advertisement of route(s) 36-1 and the reachability information therein based on interface state 34-1 being a non-forwarding state. In such a manner, remote devices (e.g., network device 10-3 in FIG. 1) would be unaware of the reachability of destinations via interface 26-1 and would not convey traffic to device 10-1 for conveyance via interface 26-1. In particular, network device 10-1 may delay the advertisement of route(s) 36-1 indefinitely until a time at which interface state 34-1 is updated to a forwarding state. At the time at which state 34-1 is a forwarding state, processing circuitry 20 of device 10-1 may advertise route(s) 36-1 and reachability information therein based on state 34-1 being a forwarding state. In general, a network device (e.g., device 10-1) may make a determination not to advertise reachability associated with its local interface(s) based on the local interface(s) having a non-forwarding state.

In a similar manner, other network devices such as network device 10-2 may also use spanning tree interface states to determine whether or not to advertise routes and reachability information (or to delay these advertisements). As an example with respect to network device 10-2 in FIG. 4, prior to processing circuitry 20 in network device 10-2 advertising network reachability associated with interface 26-2 (e.g., reachability of devices via interface 26-2) in route(s) 36-2, processing circuitry 20 of device 10-2 (e.g., when executing EVPN process 28) may obtain interface state 34-2 with respect to the spanning tree instance. Processing circuitry 20 of device 10-2 may transmit the advertisement of route(s) 36-2 and the reachability information therein based on interface state 34-2 being a forwarding state.

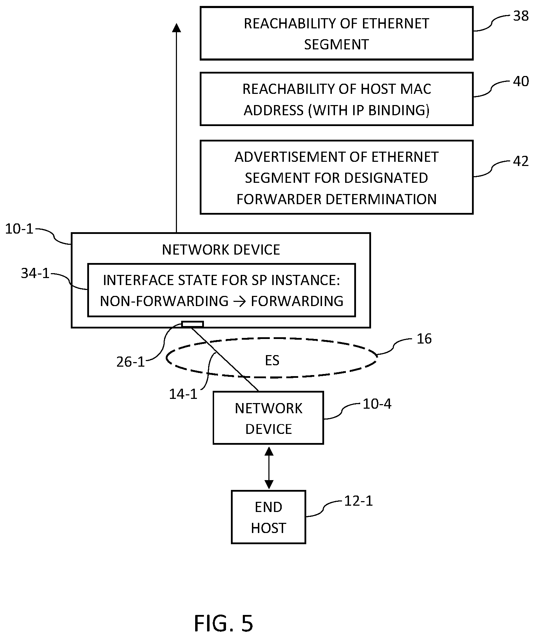

Network devices may each delay the advertisement of different types of reachability associated with a network device interface (e.g., based on a non-forwarding spanning tree interface state for the spanning tree associated with the reachability advertisement). Network devices may each perform advertisement of the different types of reachability associated with the network device interface for the spanning tree associated with the reachability advertisement after a delay time period (e.g., based on an update to the spanning tree state of the interface to a forwarding state after the delay time period). FIG. 5 is a diagram of an illustrative network device such as network device 10-1 configured to advertise reachability associated with an interface such as interface 26-1 based on a change in spanning tree interface state from a non-forwarding state to a forwarding state. As an example, the operations described in connection with FIG. 5 may occur after holding off on or delaying the advertisement route(s) 36-1 as described above in connection with the example of network device 10-1 in FIG. 4.

As shown in FIG. 5, processing circuitry 20 of network device 10-1 (e.g., when executing STP process 30) may update spanning tree interface state 34-1 for a given spanning tree (SP) instance for interface 26-1 from a non-forwarding state to a forwarding state. As examples, this may occur in response to an expiry of a time period for receiving a BPDU from multihomed device 10-4 when device 10-1 forms part of a set of devices collectively implementing a root network device group for the network topology, after resolving an initial interface state for interface 26-1 and for the spanning tree instance, after resolving an updated interface state for interface 26-1 responsive to a network topology change causing the inclusion of interface 26-1 in the spanning tree instance, and/or based on other operations associated with the spanning tree protocol performed by processing circuitry 20 of device 10-1 (e.g., as part of executing process 30).

Based on the change in spanning tree interface state 34-1 for the spanning tree instance, processing circuitry 20 of device 10-1 may identify previously stored (e.g., buffered) and/or newly generated reachability information associated with interface 26-1 to be advertised. In particular, processing circuitry 20 of device 10-1 may transmit (e.g., advertise), to remote devices (e.g., devices 10-2 and 10-3 in FIG. 1), one or more messages 38 indicating reachability of an Ethernet segment such as Ethernet segment 16 for which interface 26-1 provides link 14-1, one or more messages 40 indicating reachability of one or more host hardware addresses (e.g., Media Access Control (MAC) addresses) with optional Internet Protocol (IP) addresses bindings (e.g., an host IP address associated with the corresponding host hardware address) communicatively coupled to interface 26-1 such as a MAC address (and an optional IP address) for host 12-1, and/or one or more messages 42 advertising an Ethernet segment such as Ethernet segment 16 for designated forwarder determination (e.g., facilitating appropriate reachability of destinations for broadcast, unknown unicast, and/or multicast (BUM) traffic).

In some illustrative configurations described herein as examples, messages 38, 40, and 42 may each be a BGP message exchanged between BGP peer devices (e.g., devices 10-1, 10-2, and 10-3 in FIG. 3). As examples, the reachability of an Ethernet segment in each message 38 may be advertised as an EVPN auto-discovery per-Ethernet-segment route (sometimes referred to as an EVPN type-1 route) in a BGP message, the reachability of an host in each message 40 may be advertised as an EVPN MAC and IP (MAC-IP or MAC/IP) route (sometimes referred to as an EVPN type-2 route) in a BGP message, and the reachability of an Ethernet segment for facilitating designated forwarder determination in each message 42 may be advertised as an Ethernet segment route (sometimes referred to as an EVPN type-4 route) in a BGP message.

Routes 36-1 and/or 36-2 described in connection with FIG. 4 may each include the types of reachability information (e.g., EVPN routes) in messages 38, 40, and/or 42, and/or may each include other types of reachability information.

In other words, a network device having an interface configured to provide a link as part of an Ethernet segment and through which one or more hosts are communicatively coupled may advertise one or more EVPN routes (e.g., in BGP messages) based on the changes in spanning tree interface states of the interface for the spanning tree instances. Processing circuitry 20 of the network device may determine whether or not to transmit messages 38, 40, and/or 42 by obtaining the spanning tree state of the interface for the spanning tree instance relevant to the reachability being advertised (e.g., for the spanning tree instance associated with a VLAN to which a host belongs, with the reachability of the host being advertised in message 40). In response to determining that the spanning tree state of the interface for the relevant spanning tree instance is a forwarding state, processing circuitry 20 of the network device may transmit the messages 38, 40, and/or 42. In response to determining that the spanning tree state of the interface for the relevant spanning tree instance is a non-forwarding state, processing circuitry 20 of the network device may delay transmission of the messages 38, 40, and/or 42 until the spanning tree state of the interface for the relevant spanning tree instance is a forwarding state. Based on the spanning tree state being updated, processing circuitry 20 of the network device may obtain the forwarding spanning tree interface state of the interface and, based on the forwarding state of the interface for the relevant spanning tree instance, transmit the messages 38, 40, and/or 42.

In some instances, the operations described in connection with FIGS. 4 and 5 (e.g., make determinations based on spanning tree states) may be performed in connection with network device initialization, e.g., when network devices 10-1 and/or 10-2 are initially being connected to network device 10-4 and are initially constructing the spanning tree topologies. In some instances, the operations described in connection with FIGS. 4 and 5 may be performed at other times (e.g., throughout the normal operations of network devices 10-1 and 10-2, after the spanning tree topologies have been constructed and as the spanning tree topologies are updated). Accordingly, spanning tree interface states for a spanning tree topology (a spanning tree instance) may sometimes change from a forwarding state to a non-forwarding state (e.g., due to a topology change indicated by a received BPDU, due to network device or STP process failure, due to interface and/or link failures at the network device and/or at other network devices, etc.). Updates to reachability information may also be conveyed based on these types of updates to spanning tree interface states (e.g., from a forwarding state to a non-forwarding state).

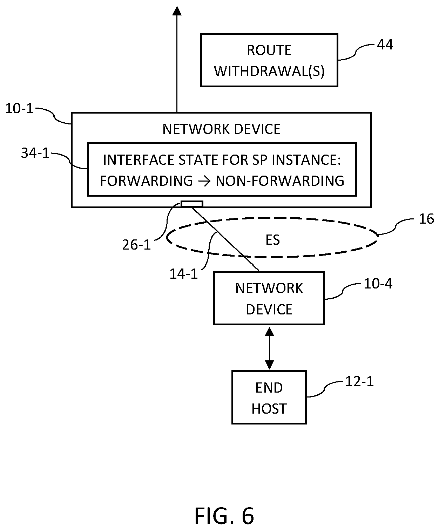

FIG. 6 is a diagram of an illustrative network device such as network device 10-1 configured to withdraw previously advertised reachability information based on the interface state for a spanning tree instance being updated to a non-forwarding state. As an example, the operations described in connection with FIG. 6 may occur after performing reachability advertisement using one or more of messages 38, 40, and/or 42 as described above in connection with the example of network device 10-1 in FIG. 5.

As shown in FIG. 6, based on one or more criteria being met (e.g., a topology change indicated by a received BPDU, a network device or STP process failure being detected, an interface and/or link failure being detected, etc.), processing circuitry 20 of device 10-1 (e.g., when executing STP process 30) may update the spanning tree interface state 34-1 of interface 26-1 for a particular spanning tree (SP) instance from a forwarding state to a non-forwarding. Responsive to the interface state 34-1 being updated from a forwarding state to a non-forwarding state for the spanning tree instance, processing circuitry 20 of device 10-1 may transmit one or more route withdrawal messages 44 to withdraw any previously sent routes (e.g., routes conveyed in messages 38, 40, and 42 in FIG. 5) or otherwise indicate withdrawal of previously indicated reachability associated with interface 26-1 and associated with the spanning tree instance.

As an example, based on a previously advertised reachability of Ethernet segment 16 (e.g., in a message 38 containing an EVPN type-1 route), processing circuitry 20 of device 10-1 may advertise updated reachability information indicative of a withdrawal of reachability of Ethernet segment 16 (e.g., a mass withdrawal of reachability of hosts communicatively coupled to Ethernet segment 16) in response to the interface state 34-1 being updated from a forwarding state to a non-forwarding state. As another example, based on a previously advertised reachability of a host MAC address (e.g., in a message 40 containing an EVPN type-2 route), processing circuitry 20 of device 10-1 may advertise updated reachability information indicative of a withdrawal of reachability of the host MAC address in response to the interface state 34-1 being updated from a forwarding state to a non-forwarding state for the spanning tree instance having a VLAN to which the host belongs. As yet another example, based on a previously advertised reachability of Ethernet segment 16 (e.g., in a message 42 containing an EVPN type-4 route), processing circuitry 20 of device 10-1 may advertise updated reachability information indicative of a withdrawal of reachability of Ethernet segment 16 (e.g., to elect a new designated forwarder for Ethernet segment 16) in response to the interface state 34-1 being updated from a forwarding state to a non-forwarding state.

While FIG. 6 provides an example in which device 10-1 performs operations in connection with the withdrawal of previously advertised reachability information in response to a spanning tree interface state being updated to a non-forwarding state, other network devices may similarly perform these operations. As an example, network device 10-2 may transmit first reachability information in routes 36-2 as described in connection with FIG. 4, and may subsequently withdraw reachability advertised in routes 36-2 in response to a spanning tree interface state 34-2 for interface 26-2 being updated from a forwarding state to a non-forwarding state.

In the examples of FIG. 4-6, a network device may obtain spanning tree interface states of a spanning tree instance based on an internal calculation or determination of the spanning tree instance. If desired, a network device may receive spanning tree interface states of other network devices and use the spanning tree interface states of the other network devices to generate or otherwise obtain the spanning tree interface states of the spanning tree instance.

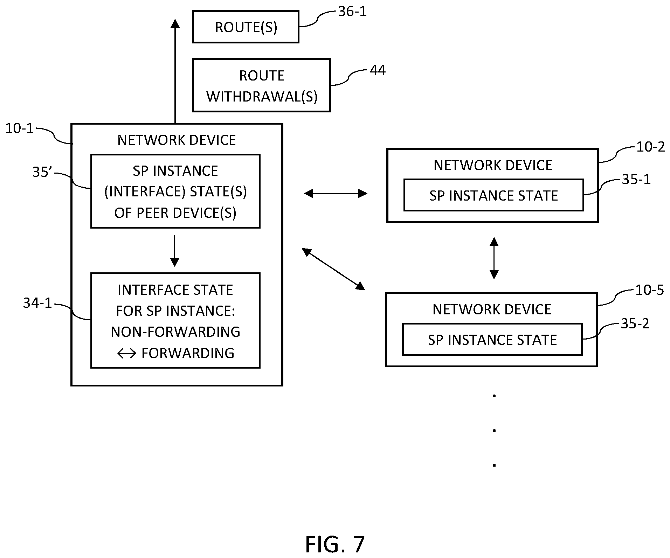

FIG. 7 is a diagram of an illustrative set of network devices configured to exchange state information for each of one or more spanning tree instances. In particular, the set of network devices may be each of the network devices multihoming a multihomed device on an Ethernet segment. By using the exchanged spanning tree information for a spanning tree instance, at least some of the network devices in the set of network devices may determine its local interface states for the spanning tree instance more efficiently (e.g., more quickly) and/or may synchronize its local interface states for the spanning tree instance to coordinate operations across the set of network devices.

As shown in the example of FIG. 7, an illustrative network device such as network device 10-1 (e.g., processing circuitry 20 therein) may obtain (e.g., receive) and store spanning tree interface states 35' (containing spanning tree instance states 35-1 and/or 35-2 from devices 10-2 and 10-5, respectively) for input-output interfaces 26 on peer network devices (e.g., other multihoming devices such as network device 10-2 in FIG.1 and an additional multihoming network device 10-5) for a given spanning tree instance. In particular, the interface states 35' received from other network devices may be for the same spanning tree instance and for input-output interfaces providing Ethernet links to the same Ethernet segment as interface 26-1 of device 10-1 (for which the spanning tree interface state is being determined).

As an example, processing circuitry 20 of device 10-1 may receive state information 35-1 for the spanning tree instance transmitted from processing circuitry 20 of device 10-2 such as a spanning tree interface state of interface 26-2 (e.g., a forwarding state 34-1 as described in connection with FIG. 4). Based on receiving the forwarding state of interface 26-2 for the spanning tree instance, processing circuitry 20 of device 10-1 may determine the spanning tree interface state 34-1 of local interface 26-1 coupled to the same Ethernet segment 16 to be a forwarding state. The use of spanning tree interface state of interface 26-2 for the same spanning tree (e.g., when interfaces 26-1 and 26-2 are on network devices 10-1 and 10-2 forming the same root network device group) may help processing circuitry 20 of device 10-1 omit the need to wait to the end of the timeout time period before updating the spanning tree interface state of interface 26-1 to a forwarding interface. In other words, the operations performed by device 10-1 to advertise routes 36-1 described in connection with FIG. 5 may be performed more quickly after the operations performed by device 10-1 not to advertise routes 36-1 described in connection with FIG. 5 (e.g., the delay between not advertising reachability and advertising reachability associated with interface 26-1 is shortened), thereby leading to fast network convergence to a network configuration in which interface 26-1 appropriately handles host traffic.

In some instances, there may be additional multihoming device(s) (e.g., device 10-5) having an interface coupled to the same Ethernet segment 16. In general, processing circuitry 20 of device 10-1 may determine the spanning tree interface state 34-1 of local interface 26-1 coupled to the same Ethernet segment 16 to be a forwarding state based on the received forwarding spanning tree interface state(s) of any (one), some, or all of the other network device interfaces coupled to Ethernet segment 16 for the spanning tree instance.

In a similar manner, based on receiving the non-forwarding state of one or more (e.g., any, some, all of) interfaces of one or more corresponding network devices for the spanning tree instance coupled to the same Ethernet segment 16, processing circuitry 20 of device 10-1 may determine the spanning tree interface state 34-1 of local interface 26-1 coupled to the same Ethernet segment 16 to be a non-forwarding state. Accordingly, processing circuitry 20 of device 10-1 may perform the operations described in connection with FIG. 6 to transmit message(s) containing updated network reachability information (e.g., withdrawing previously advertised reachability information) based on the non-forward state of the spanning tree interface state 34-1 of local interface 26-1.

If desired, the spanning tree state information exchanged between the set of multi-homing network devices may include information in any received BPDUs. Accordingly, a network device (e.g., device 10-1) may synchronize local interface states for the spanning tree instance to interface states for the spanning tree instance of other network devices based on the exchange of spanning tree information (e.g., the BPDU information).

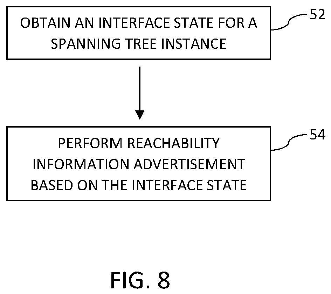

FIG. 8 is a flowchart of illustrative operations for operating one or more network devices. The illustrative operations described in connection with FIG. 8 performed by one or more processors (e.g., processing circuitry 20 and/or packet processors 24 in FIG. 2) in each network device by executing software instructions stored on corresponding memory circuitry 22 (e.g., one or more non-transitory computer-readable media). If desired, one or more operations described in connection with FIG. 8 may be performed by other dedicated hardware components in each network device.

At block 52, one or more processors of a network device may obtain (e.g., determine) a spanning tree interface state (e.g., a forwarding state or a non-forwarding state) of a network device interface for a spanning tree instance. In some instances, the interface state may be obtained as part of the operations for initially constructing the spanning tree instance, as part of the operations for updating the spanning tree instance based a network change (e.g., a network topology change, a network device or link failure, etc.), and/or generally as part of an internal determination or calculation process based on received BPDUs or other information. If desired, the interface state may be obtained based on spanning tree interface states of interfaces of other network devices (e.g., interfaces of other peer multihoming network devices coupled to the same Ethernet segment) obtained from the other network devices.

At block 54, the one or more processors of the network device may perform reachability information advertisement (e.g., transmit advertisement messages containing the reachability information) based on the interface state. As a first example, the one or more processors may advertise reachability information by transmitting messages advertising network reachability associated with the interface (e.g., reachability of an Ethernet segment formed by an Ethernet link provided by the interface, reachability of hosts communicatively coupled to the interface and the Ethernet segment, etc.) based on the interface state being determined to be a forwarding state. As a second example, the one or more processors may delay the transmission of messages advertising reachability, based on the interface state being determined to be a non-forwarding state, until the interface state is updated to a forwarding state. As a third example, the one or more processors may advertise reachability information by transmitting messages containing reachability information indicative of withdrawal of previously advertised reachability information based on the interface state being determined to be a non-forwarding state.

In some illustrative configurations described herein as an example, the one or more processors may generate and transmit, to other BGP and/or EVPN network devices, one or more BGP advertisement messages each containing one or more of an EVPN auto-discovery per-Ethernet-segment (type-1) route, an EVPN MAC address and IP address (type-2) route, or an EVPN Ethernet segment (type-4) route.

While some examples provided herein are generally described in connection with spanning tree interface states of a single spanning tree instance (e.g., for handling traffic for one or more VLANs), these examples may be similarly applicable to multiple spanning tree instances for which the operations for a single spanning tree instance as described herein are independently performed by each of the multiple spanning tree instances. In other words, as an illustrative example when implementing first and second spanning tree instances, the same network device interface may have the same or different spanning tree interface states for the first and second spanning tree instances, thereby leading to the independent decisions on reachability advertisement and withdrawal for the first and second spanning tree instances (e.g., as described in connection with FIGS. 4-8).

The methods and operations described above in connection with FIGS. 1-8 may be performed by the components of one or more network devices and/or server or other host equipment using software, firmware, and/or hardware (e.g., dedicated circuitry or hardware). Software code for performing these operations may be stored on non-transitory computer-readable storage media (e.g., tangible computer-readable storage media) stored on one or more of the components of the network device(s) and/or server or other host equipment. The software code may sometimes be referred to as software, data, instructions, program instructions, or code. The non-transitory computer readable storage media may include drives, non-volatile memory such as non-volatile random-access memory (NVRAM), removable flash drives or other removable media, other types of random-access memory, etc. Software stored on the non-transitory computer readable storage media may be executed by processing circuitry on one or more of the components of the network device(s) and/or server or other host equipment (e.g., by respective processing circuitry 20 in one or more network devices 10 in FIGS. 1-8).

In accordance with an embodiment, a network device includes an input-output interface, memory circuitry, and processing circuitry coupled to the memory circuitry and configured to determine a spanning tree interface state of the input-output interface for a spanning tree instance, and transmit a message containing network reachability information based on the determined spanning tree interface state of the input-output interface for the spanning tree instance.

In accordance with another embodiment, the spanning tree interface state of the input-output interface for the spanning tree instance is optionally a forwarding state and the network reachability information in the message indicates reachability of a network portion associated with the input-output interface and the spanning tree instance.

In accordance with another embodiment, the indicated reachability optionally includes reachability of an Ethernet segment containing an Ethernet link provided by the input-output interface or reachability of a host communicatively coupled to the input-output interface.

In accordance with another embodiment, the spanning tree interface state of the input-output interface for the spanning tree instance is optionally a non-forwarding state and the processing circuitry is configured to transmit the message containing the network reachability information by delaying the transmission of the message, based on the spanning tree interface state being the non-forwarding state, until the spanning tree interface state of the input-output interface for the spanning tree instance is a forwarding state.

In accordance with another embodiment, the non-forwarding state optionally includes a discarding state, a learning state, a blocking state, a listening state, or a disabled state.

In accordance with another embodiment, the spanning tree interface state of the input-output interface for the spanning tree instance is optionally a non-forwarding state and the network reachability information in the message indicates a withdrawal of previously advertised reachability information.

In accordance with another embodiment, the processing circuitry is optionally configured to determine the spanning tree interface state of the input-output interface for the spanning tree instance by determining an initial spanning tree interface state of the input-output interface when constructing the spanning tree instance.

In accordance with another embodiment, the processing circuitry is optionally configured to determine the spanning tree interface state of the input-output interface for the spanning tree instance by determining an updated spanning tree interface state of the input-output interface when updating the spanning tree instance based on a network change.

In accordance with another embodiment, the processing circuitry is optionally configured to receive, from an additional network device, an additional spanning tree interface state of an additional input-output interface of the additional network device for the spanning tree instance and the spanning tree interface state of the input-output interface for the spanning tree instance is determined based on the received additional spanning tree interface state.

In accordance with another embodiment, the message optionally includes an Ethernet Virtual Private Network (EVPN) auto-discovery per-Ethernet-segment route, an EVPN Media Access Control address and Internet Protocol address route, or an EVPN Ethernet segment route.

In accordance with another embodiment, the message is optionally a Border Gateway Protocol (BGP) message.

In accordance with another embodiment, the network device is optionally configured to operate in an all-active multihoming configuration along with one or more additional network devices, where the input-output interface is configured to provide an Ethernet link forming part of an Ethernet segment provided by each of the one or more additional network devices.

In accordance with an embodiment, a network device operable with at least one additional network device to multihome a device using an Ethernet segment, the network device includes an input-output interface, memory circuitry, andprocessing circuitry coupled to the memory circuitry and configured to obtain a spanning tree state of the input-output interface for a spanning tree topology and advertise an Ethernet Virtual Private Network (EVPN) route based on the obtained spanning tree state.

In accordance with another embodiment, the EVPN route is optionally advertised in response to the spanning tree state of the input-output interface for the spanning tree topology being a forwarding state.

In accordance with another embodiment, the processing circuitry is optionally configured to withdraw the advertised EVPN route in response to the spanning tree state of the input-output interface for the spanning tree topology being updated to a non-forwarding state.

In accordance with another embodiment, the processing circuitry is optionally configured to delay the advertisement of the EVPN route in response to the spanning tree state of the input-output interface for the spanning tree topology being a non-forwarding state.

In accordance with an embodiment, a network device includes memory circuitry and processing circuitry coupled to the memory circuitry, and configured to perform one or more operations in accordance to a spanning tree protocol at least in part to obtain state information for a spanning tree instance, and transmit an advertisement message containing a route based on the state information for the spanning tree instance.

In accordance with another embodiment, the spanning tree instance is optionally for one or more Virtual Local Area Networks (VLANs) and the state information optionally includes spanning tree states of input-output interfaces for the spanning tree instance.

In accordance with another embodiment, the advertisement message is optionally a Border Gateway Protocol (BGP) message and the route is an Ethernet Virtual Private Network (EVPN) type-1 route, an EVPN type-2 route, or an EVPN type-4 route.

In accordance with another embodiment, the spanning tree instance is optionally indicative of a network topology that is loop-free.

The foregoing is merely illustrative and various modifications can be made to the described embodiments. The foregoing embodiments may be implemented individually or in any combination.

## Claims

1. A network device comprising:
an input-output interface;
memory circuitry; and
processing circuitry coupled to the memory circuitry and configured to:
determine a spanning tree interface state of the input-output interface for a spanning tree instance; and
transmit a message containing network reachability information based on the determined spanning tree interface state of the input-output interface for the spanning tree instance.

2. The network device defined in claim 1, wherein the spanning tree interface state of the input-output interface for the spanning tree instance is a forwarding state and wherein the network reachability information in the message indicates reachability of a network portion associated with the input-output interface and the spanning tree instance.

3. The network device defined in claim 2, wherein the indicated reachability comprises reachability of an Ethernet segment containing an Ethernet link provided by the input-output interface or reachability of a host communicatively coupled to the input-output interface.

4. The network device defined in claim 1, wherein the spanning tree interface state of the input-output interface for the spanning tree instance is a non-forwarding state and wherein the processing circuitry is configured to transmit the message containing the network reachability information by delaying the transmission of the message, based on the spanning tree interface state being the non-forwarding state, until the spanning tree interface state of the input-output interface for the spanning tree instance is a forwarding state.

5. The network device defined in claim 4, wherein the non-forwarding state comprises a discarding state, a learning state, a blocking state, a listening state, or a disabled state.

6. The network device defined in claim 1, wherein the spanning tree interface state of the input-output interface for the spanning tree instance is a non-forwarding state and wherein the network reachability information in the message indicates a withdrawal of previously advertised reachability information.

7. The network device defined in claim 1, wherein the processing circuitry is configured to determine the spanning tree interface state of the input-output interface for the spanning tree instance by determining an initial spanning tree interface state of the input-output interface when constructing the spanning tree instance.

8. The network device defined in claim 1, wherein the processing circuitry is configured to determine the spanning tree interface state of the input-output interface for the spanning tree instance by determining an updated spanning tree interface state of the input-output interface when updating the spanning tree instance based on a network change.

9. The network device defined in claim 1, wherein the processing circuitry is configured to receive, from an additional network device, an additional spanning tree interface state of an additional input-output interface of the additional network device for the spanning tree instance and wherein the spanning tree interface state of the input-output interface for the spanning tree instance is determined based on the received additional spanning tree interface state.

10. The network device defined in claim 1, wherein the message includes an Ethernet Virtual Private Network (EVPN) auto-discovery per-Ethernet-segment route, an EVPN Media Access Control address and Internet Protocol address route, or an EVPN Ethernet segment route.

11. The network device defined in claim 10, wherein the message is a Border Gateway Protocol (BGP) message.

12. The network device defined in claim 1, wherein the network device is configured to operate in an all-active multihoming configuration along with one or more additional network devices, wherein the input-output interface is configured to provide an Ethernet link forming part of an Ethernet segment provided by each of the one or more additional network devices.

13. The network device defined in claim 1, wherein the spanning tree instance is for one or more Virtual Local Area Networks (VLANs).

14. The network device defined in claim 1, wherein the message is a Border Gateway Protocol (BGP) message that includes an Ethernet Virtual Private Network (EVPN) type-1 route, an EVPN type-2 route, or an EVPN type-4 route.

15. The network device defined in claim 1, wherein the spanning tree instance is indicative of a network topology that is loop-free.
